# EUROPÄISCHE PATENTSCHRIFT

(11) **EP 3 853 586 B1**
(45) Veröffentlichungstag und Bekanntmachung des Hinweises auf die Patenterteilung: **29.04.2026**
(21) Anmeldenummer: 19766167.1
(22) Anmeldetag: 28.08.2019
(51) Int. Cl.: G01N 21/3581, G01N 21/88

(54) **THZ-MESSGERÄT UND THZ-MESSVERFAHREN ZUR ERMITTLUNG VON FEHLSTELLEN IN MESSOBJEKTEN**
THZ MEASURING DEVICE AND THZ MEASURING METHOD FOR DETERMINING DEFECTS IN MEASURING OBJECTS
DISPOSITIF DE MESURE THZ ET PROCÉDÉ DE MESURE THZ POUR DÉTECTER DES DÉFAUTS DANS DES OBJETS DE MESURE

(30) Priorität: 19.09.2018 DE 102018122965
(43) Veröffentlichungstag der Anmeldung: 28.07.2021
(73) Patentinhaber: iNOEX GmbH Innovationen und Ausrüstungen für die Extrusionstechnik, 49324 Melle (DE)
(72) Erfinder: KLOSE, Ralph, 49324 Melle (DE)
(74) Vertreter: Bremer, Ulrich
(86) Internationale Anmeldenummer: PCT/DE2019/100778
(87) Internationale Veröffentlichungsnummer: WO 2020/057689

(56) Entgegenhaltungen:
- DE-A1- 102015 122 205
- DE-A1- 102016 105 599
- DE-A1- 102016 111 044
- DE-A1- 102016 119 728
- KR-A- 20160 149 429
- US-B1- 9 423 358
- NEIERS X ET AL: "Rapid control of machined glass fiber reinforced plastics by single shot terahertz time domain spectroscopy", 2015 40TH INTERNATIONAL CONFERENCE ON INFRARED, MILLIMETER, AND TERAHERTZ WAVES (IRMMW-THZ), IEEE, 23 August 2015 (2015-08-23), pages 1 - 2, XP032805265, DOI: 10.1109/IRMMW-THZ.2015.7327395

## Beschreibung

Die Erfindung betrifft ein THz-Messgerät und ein THz-Messverfahren zur Ermittlung von Fehlstellen in Messobjekten. Derartige Messobjekte können insbesondere aus einem Kunststoff hergestellt sein, aber auch aus einem anderen, für THz-Strahlung grundsätzlich durchlässigen Material wie Keramik, Beton oder Papier. Fehlstellen können insbesondere Lunker, das heißt beim Herstellen ausgebildete Leerräume, aber auch Risse, Spalten, sowie Einschlüsse aus anderen Materialien, z.B. Metallsplitter sein.

Bei der THz-Vermessung von Messobjekten wird THz-Strahlung, insbesondere elektromagnetische Strahlung im Frequenzbereich von 0,01-10 THz, von einem THz-Transceiver auf das Messobjekt ausgestrahlt; die ausgestrahlte elektromagnetische Strahlung kann somit insbesondere auch im Mikrowellenbereich liegen. Die auf das Messobjekt gestrahlte THz-Strahlung wird an Grenzflächen des Messobjektes, das heißt beim Übergang zwischen Medien mit unterschiedlichem Brechungsindex, teilweise reflektiert. Somit lassen sich über die teilweise Reflektion Schichtdicken ermitteln und zum Beispiel Lufteinschlüsse an ihren Grenzflächen nachweisen; Metallsplitter können durch die vollständige Reflektion der THz-Strahlung nachgewiesen werden.

Der THz-Transceiver kann grundsätzlich optisch ausgebildet sein, zum Beispiel mittels direkter Laufzeitmessung des ausgesandten THz- Sendestrahls und der reflektierten THz-Strahlung. Weiterhin sind vollelektronische THz-Messsysteme bekannt, bei denen ein Antennendipol die THz-Strahlung als Transceiver erzeugt und die reflektierte THz-Strahlung aufnimmt. Hierbei kann insbesondere eine Frequenzmodulation eingesetzt oder auch gepulste THz- Strahlung ausgesandt werden.

Bei Phased-Array-Messsystemen sind weitere THz-Receiver, zum Beispiel passive THz-Antennendipole, mit dem aktiv sendenden THz- Transceiver verbunden, sodass auch nicht-senkrecht zum THz-Transceiver reflektierte THz-Strahlung detektiert werden kann; entsprechend sind der THz-Transceiver und der THz-Receiver miteinander synchronisiert, um eine Abstimmung des Sendezeitpunktes für eine Abstandsmessung als Laufzeitmessung oder Frequenzmodulation zu ermöglichen.

Eine Ermittlung von Fehlstellen ist insbesondere direkt nach der Herstellung von Kunststoff-Rohren oder Kunststoff-Folien vorgesehen, indem die Messobjekte an stationären THz-Messgeräten, z.B. Mess-Röhren, vorbeigeführt werden. Ein Nachweis von Fehlstellen, zum Beispiel auch Material- Ermüdungen und Rissen, an stationären Messobjekten ist jedoch im Allgemeinen mit derartigen stationären THz-Messgeräten kaum möglich.

Die DE 10 2016 111 044 A1 beschreibt eine Terahertz-Messvorrichtung und ein Terahertz-Messverfahren zur Vermessung eines Prüfobjektes, bei denen eine Terahertz-Sende- und Empfangseinheit und mindestens eine, vorzugsweise mehrere passive Terahertz-Empfangseinrichtungen, deren optische Achsen zu der optischen Achse der Terahertz-Sende- und Empfangseinheit versetzt oder geneigt angeordnet sind, zur Vermessung des Prüfobjektes dienen. Hierbei sind die mehreren Einheiten bzw. Einrichtungen um ein Prüfobjekt herum angeordnet und stationär vorgesehen.

Die DE 10 2016 105 599 A1 beschreibt eine weitere Terahertz-Messvorrichtung zur Vermessung von Prüfobjekten, bei der Terahertz-Strahlung in einem Abstrahl-Raumwinkel entlang einer optischen Achse ausgesandt und Reflexionen detektiert werden. Hierbei werden aus der Signalamplitude Fehlstellen ermittelt, wobei insbesondere ein Kernbereich der ausgesandten Terahertz-Strahlung ausgeblendet werden kann.

Die KR 10-2016-0149429 beschreibt eine Messvorrichtung mit Femtosekundenlasern und geeigneten halbdurchlässigen Spiegeln zur Vermessung eines scheibenförmigen Prüfobjektes.

Die DE 10 2016 119 728 A1 beschreibt ein Terahertz-Messgerät zur Ermittlung mindestens einer Schichtdicke eines Prüfobjektes, das an einem Griffbereich tragbar ist und an seinem vorderen Endbereich eine Formblende mit einer Auflagekontur zur Anlage an einer gekrümmten Oberfläche eines Prüfobjektes ausgebildet ist.

Der Erfindung liegt die Aufgabe zugrunde, ein THz-Messgerät und ein THz-Messverfahren zum Ermitteln von Fehlstellen in Messobjekten zu schaffen, die mit relativ geringem Aufwand eine sichere Detektion ermöglichen.

Diese Aufgabe wird durch ein THz-Messgerät und ein THz- Messverfahren nach den unabhängigen Ansprüchen gelöst. Die Unteransprüche beschreiben bevorzugte Weiterbildungen. Das THz-Messverfahren wird insbesondere mit dem THz-Messgerät durchgeführt; das THz-Messgerät ist insbesondere zur Ausführung des THz-Messverfahrens vorgesehen.

Somit ist ein THz-Messgerät mit mindestens einem aktiven THz-Sender und mehreren, zumindest zeitweise passiven THz-Receivern vorgesehen. Der THz-Sender und die THz-Receiver sind hierbei vorzugsweise vollelektronisch, das heißt als Antennen-Dipole ausgebildet und bilden somit ein Antennen-Array.

Der THz-Sender kann insbesondere ein THz-Transceiver sein, d.h. als kombinierte Sende- und Empfangseinrichtung ausgebildet sein.

Die Steuereinrichtung nimmt die THz-Messsignale auf und ermittelt Fehlstellen als Reflektionen, die außerhalb ordnungsgemäßer Grenzflächen des Messobjektes erfolgt sind; das bedeutet, die Steuereinrichtung nimmt die THz-Messsignale auf und ermittelt Reflektionen, die außerhalb ordnungsgemäßer Grenzflächen des Messobjektes erfolgt sind, und bewertet diese als Fehlstellen.

Somit sendet der THz-Sender, der zum Beispiel in der Mitte des Antennen-Arrays ausgebildet ist, den THz-Sendestrahl entlang einer optischen Achse, insbesondere mit einem Aussende-Kegel um die optische Achse herum. Die THz-Strahlung kann an Fehlstellen reflektiert und zumindest teilweise in Richtung des Antennen-Arrays zurück reflektiert werden, sodass einer der THz-Receiver oder der als THz-Transceiver ausgebildete THz-Sender selbst die reflektierte Strahlung empfängt.

Das Messsignal des THz-Senders kann hierbei zunächst einer Schichtdickenmessung des Messobjektes dienen. Aus dem zeitlich verschobenen Eintreffen der reflektieren Strahlung bei den Empfängern kann der Winkel ausgewertet und somit Entfernung und Lage der Reflektionsquelle im Raum bestimmt werden. So wird von einer gekrümmten Oberfläche einer Fehlstelle, wie sie zum Beispiel bei Lufteinschlüssen vorliegt, der THz-Sendestrahl als Wellenfront zu dem Antennen-Array reflektiert, und es kann von mehreren THz-Receivern und ggf. dem THz-Transceiver selbst jeweils ein Reflektionspeak empfangen werden, sodass aus den Laufzeiten bzw. relativen Zeitverschiebungen zueinander die Position und Formgebung der Oberfläche der Fehlstelle bereits mit einer höheren Genauigkeit ermittelt oder abgeschätzt werden kann. Hierbei kann das Antennen-Array zunächst als lineare Sensor-Leiste ausgebildet sein, sodass seine Erstreckung bzw. laterale Breite den Winkel der detektierbaren reflektierten THz-Strahlung festlegt.

Hierdurch ergibt sich weiterhin der Vorteil, dass gerade auch Krümmungen der Fehlstelle sehr gut nachvollzogen werden können, da die mehreren, zueinander benachbarten THz-Receiver eine Abschätzung oder Triangulation aus mehreren Reflektionspeaks ermöglichen.

Gemäß einer Weiterbildung fungieren auch die THz-Receiver zumindest zeitweise als Sender, das heißt insbesondere zeitweise als THz-Transceiver. Somit wird ein Antennen-Array gebildet, bei dem mehrere THz-Transceiver zum Beispiel als Sensor-Leiste aneinander gereiht sind. Jeder THz-Transceiver sendet zeitweise den THz-Sendestrahl entlang seiner optischen Achse, vorzugsweise senkrecht zur Sensorzeile, auf das Messobjekt, wobei dann die anderen THz-Transceiver passiv als THz-Receiver fungieren. Das THz-Array kann somit insbesondere alternierend mit durchwechselnder aktiver Funktion des THz-Transceivers betrieben werden.

Hierdurch lässt sich bereits eine hohe Anzahl von Messsignalen erreichen, da unterschiedliche, insbesondere parallel mit jeweils einem Aussende-Kegel ausgesandte THz-Sendestrahlen auf das Messobjekt ausgestrahlt werden und somit eine Vielzahl von Vermessungen erfasst werden können. Somit können gekrümmte Flächen dreidimensional im Raum geortet werden. Hierbei ist der apparative Mehraufwand, auch die weiteren Dipol-Antennen zeitweise als aktive THz-Transceiver zu betreiben, relativ gering.

Eine weitere vorteilhafte Ausbildung wird durch eine zweidimensionale Ausbildung des Antennen-Arrays erreicht. Hierbei können zum Beispiel zwei miteinander gekreuzte Sensorleisten eingesetzt werden, zum Beispiel mit einem Winkel von 90° zwischen den Sensorleisten. Auch hier kann wiederum zum Beispiel nur die mittlere Dipol-Antenne als aktiver THz-Transceiver, und die weiteren Dipol-Antennen als passive THz-Receiver ausgebildet sein. Vorteilhafterweise sind jedoch wiederum sämtliche Dipol-Antennen zeitweise aktive THz-Transceiver und entsprechend zeitweise lediglich passiv.

Bereits mit einer derartigen Ausbildung kann ein Tiefenbild der Fehlstellen ermittelt werden. Somit kann zum Beispiel zum einen das Messobjekt mit seinen äußeren Grenzflächen sicher erfasst und ausgemessen werden, und weiterhin in dem Messobjekt die Position, Lage und Erstreckung einer Fehlstelle wie zum Beispiel eines Lunkers erfasst und auch z.B. auf einer Anzeige, insbesondere einer externen Anzeigeeinrichtung einer angeschlossenen Recheneinrichtung, visualisiert werden. Somit kann neben der Position im Material auch das Volumen eines Lunkers abgeschätzt werden.

Eine derartige zweidimensionale Array-Anordnung kann z.B. lediglich zwei sich kreuzende Sensorleisten aufweisen; grundsätzlich kann auch eine 2D-Matrix von Antennen-Arrays ausgebildet werden. Es zeigt sich jedoch, dass der apparative Mehraufwand einer vollständigen 2D-Anordnung gegenüber den sich kreuzenden Sensorleisten nicht den deutlichen Vorteil aufweist; bereits die zwei sich kreuzenden Sensorleisten ermöglichen eine gute zweidimensionale Erfassung mit relativ geringer Anzahl von Antennen-Dipolen.

Ein weiterer Vorteil wird durch die Kombination mit einer Beschleunigungssensor-Einrichtung, insbesondere Beschleunigungssensoren zur dreidimensionalen Erfassung von Beschleunigungen, das heißt in den drei Raumrichtungen erfasst. Somit kann die Steuereinrichtung zum einen die THz-Messsignale der einzelnen THz-Transceiver aufnehmen, und diese weiterhin mit den Beschleunigungssensorsignalen kombiniert auswerten. Durch zeitliche Integration der Beschleunigungssignale können den Messsignalen somit dreidimensionale Positionen im Raum zuordnet werden.

Erfindungsgemäß ist ein tragbares THz-Messgerät ausgebildet, bei dem der Benutzer vorzugsweise durch Handhaben und Verstellen des Messgeräts, insbesondere Entlangfahren an dem Messobjekt, eine sehr genaue Vermessung durchführen kann. Hierbei ist das THz-Messgerät zumindest mit seinem Antennen-Array tragbar, wobei sein tragbarer Teil einen Griffbereich zum Erfassen durch den Benutzer und Positionieren an verschiedenen Positionen vor dem Messobjekt aufweist

Die Steuereinrichtung ermittelt aus den Beschleunigungssignalen die jeweilige dreidimensionale Position des THz-Messgeräts relativ zu dem Messobjekt und kann die Vielzahl von Messsignalen somit den Punkten zuordnen. Der Benutzer kann somit bei Detektion einer möglichen Fehlstelle mit dem THz-Messgerät diesen Bereich genauer vermessen und das THz-Messgerät zum Beispiel translatorisch verstellen oder drehen und schwenken, um weitere Messsignale zu erfassen. Somit kann ein Lunker bei einmaliger Detektion nachfolgend genauer erfasst und auch der Krümmungsverlauf seiner Oberfläche, und somit Lage und Volumen, genau erfasst werden. Somit kann auch das aus gekreuzten Sensorleisten gebildete, apparativ einfach und leicht handhabbare Array eine entsprechende Anzahl von Messsignalen liefern wie eine aufwendigere und kostspieligere 2D-Matrix-Anordnung.

Gemäß einer Weiterbildung kann eine optische Kamera, insbesondere RGB-Kamera ergänzend an dem Messgerät angebracht sein und somit zusätzliche Bildsignale liefern, die von der Steuereinrichtung mit ausgewertet und kombiniert werden. Somit kann insbesondere auf einer angeschlossenen Anzeigeeinrichtung ein Bild des Messobjektes entsprechend den Bildsignalen angezeigt werden und mit den ergänzenden, aus den THz-Messsignalen gewonnenen Informationen erweitert werden.

Bei einer derartigen Darstellung kann auch bei Vermessung eines Messobjektes von lediglich einer Seite her zum Beispiel die Vorderseite und Rückseite angezeigt werden, da diese Grenzflächen durch die THz-Strahlung sicher ermittelt werden können, und weiterhin die Position und Anordnung der Fehlstellen angezeigt werden, sodass der Benutzer zum Beispiel eine Markierung an dem Werkstück setzen kann, die die Position und Größe der Fehlstelle anzeigt.

Somit führen Bewegungen des Messgerätes nicht zu Messungenauigkeiten, sondern zu weiteren Messinformationen, die als weitere Messung von anderen Positionen im Raum aus bewertet und zur genaueren Ermittlung von Fehlstellen herangezogen werden können.

Weiterhin kann auch die Amplitude des THz-Messsignals dahingehend ausgewertet werden, dass die Höhe der Amplitude der Messpeaks einer Fehlstelle ermittelt und einer Größe bzw. der erfassten Fläche der Fehlstelle zugeordnet wird. Somit kann z.B. die Flächenausdehnung der Fehlstelle ermittelt werden, insbesondere auch durch Messungen in mehreren Schwenkstellungen des THz-Messgeräts.

Somit kann ein vollständiges 3D-Modell des Werkstücks, einschließlich seiner Grenzflächen, Ausbildung und Erstreckung seiner Fehlstellen nachgebildet und auf einer Anzeige auch visualisiert werden.

Neben einer Anwendung bei zum Beispiel der Extrusion von Kunststoffartikeln wie Kunststoffrohren und Kunststofffolien kann das Messgerät insbesondere auch bei der nachträglichen Materialprüfung eingesetzt werden. So können Rotoren von Windkraftanlagen als statische Messobjekte durch ein tragbares Messgerät sicher und genau vermessen werden. Es können insbesondere Haarrisse und Delaminierungen als Fehlstellen erfasst werden, z.B. über die Lufteinschlüsse in den Haarrissen und Delaminierungen, und deren Größen ermittelt werden. Weiterhin können Rohrbrüche von außen detektiert werden. Auch können zum Beispiel Metallrohre in einer Kunststoff- oder Steingut- Umgebung erfasst werden.

Die Erfindung wird im Folgenden anhand der beiliegenden Zeichnungen an einigen Ausführungsformen erläutert. Es zeigen:
- Fig. 1: die Vermessung eines Messobjektes mit einem Messgerät gemäß einer ersten Ausführungsform bei Darstellung in einer Messebene;
- Fig. 2: eine perspektivische Ansicht der dreidimensionalen Vermessung eines Messobjektes mit einem THz-Messgerät gemäß einer Ausführungsform;
- Fig. 3: eine weitere perspektivische Ansicht der Vermessung eines Messobjektes mit einem Messgerät gemäß einer weiteren Ausführungsform mit zusätzlicher RGB-Kamera;
- Fig. 4: ein Beispiel eines unregelmäßigen, zu vermessenden Messobjektes mit Lunker;
- Fig. 5: die Vermessung einer Wand als Messobjekt mit einem tragbaren Messgerät.
- Fig. 6: ein Beispiel eines Signaldiagramms eines THz-Messsignals.

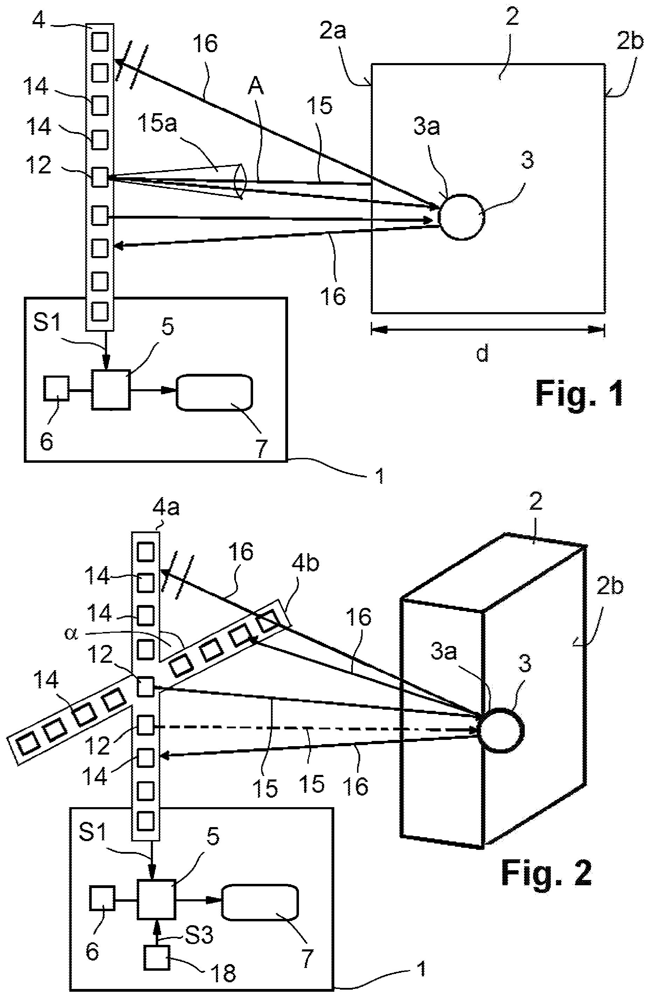

Gemäß Fig. 1 ist ein THz-Messgerät 1 vorgesehen zur Vermessung eines stationären Messobjektes 2, zum Beispiel aus Kunststoff oder aus einem Keramik- oder Steinmaterial. Das Messobjekt 2 weist Grenzflächen 2a, 2b, zum Beispiel eine Vorderseite 2a und eine Rückseite 2b auf. In dem Messobjekt 2 können Fehlstellen 3, zum Beispiel wie in Fig. 1 gezeigt als von außen nicht sichtbare Lunker (Freiraum) oder auch Risse und Spalten ausgebildet sein, zum Beispiel auch auf der von der Vorderseite her für den Benutzer nicht direkt ersichtlichen Rückseite 2b.

Das THz-Messgerät 1 weist ein Antennen-Array 4, weiterhin eine Steuereinrichtung 5, einen internen Speicher 6, sowie eine Ausgabeeinrichtung 7 auf. Die Ausgabeeinrichtung kann zum Beispiel eine optische Anzeigeeinrichtung 7 zur Visualisierung des Messobjektes 2 und der Fehlstellen 3, und/oder eine akustische Anzeige sein, die zum Beispiel bei Erkennen einer Fehlstelle 3 ein Signal ausgibt.

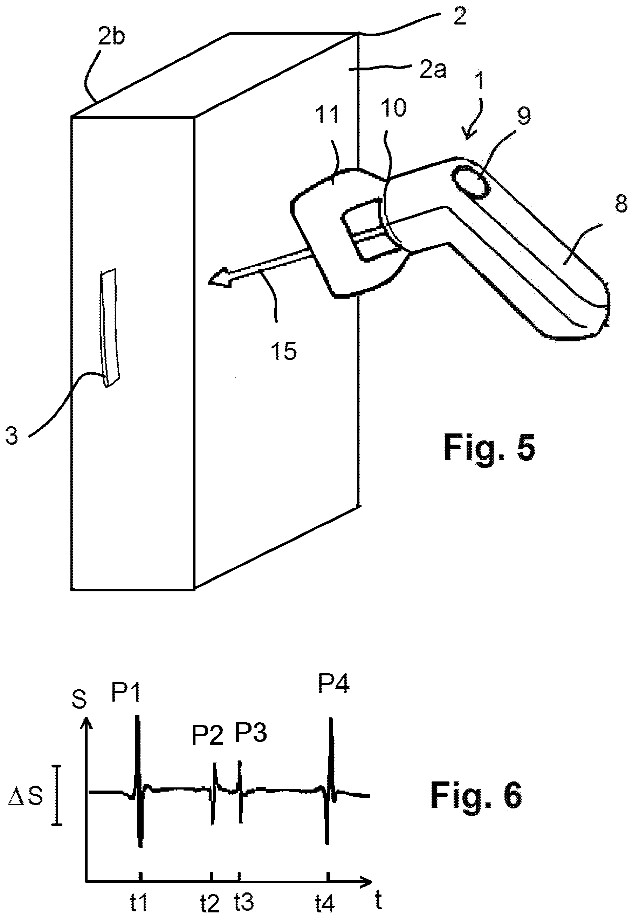

Weiterhin weist das THz-Messgerät 1 vorteilhafterweise einen in Fig. 5 gezeigten Griffbereich 8 zum Ergreifen durch den Benutzer, eine Betätigungseinrichtung 9 und an einem vorderen Endbereich 10 eine Anlagekontur 11 bzw. Konturlinien zur Anlage an den Grenzflächen, das heißt der Vorderseite 2a und ggf. der Rückseite 2b des Messobjektes 2 auf.

Gemäß der Ausführungsform der Fig. 1 weist das Antennen-Array 4 zunächst als Sender einen mittleren Transceiver 12 auf, der als Antennen-Dipol ausgebildet ist und einen THz-Sendestrahl 15 entlang seiner optischen Achse A aussendet. Das Antennen-Array 4 weist weiterhin mehrere Receiver 14 auf, die entsprechend als Antennen-Dipole ausgebildet sind und von dem Messobjekt 2 reflektierte THz-Strahlung 16 detektieren. Der Transceiver 12 und die Receiver 14 sind miteinander bzw. über die Steuereinrichtung 5 synchronisiert, sodass Sende- und Empfangszeitpunkte verglichen werden können.

Der THz-Transceiver 12 sendet THz-Strahlung, im Allgemeinen im Frequenzbereich zwischen 0,01 THz und 10 THz, insbesondere frequenzmoduliert oder gepulst aus, es sind jedoch auch direkte Laufzeitmessungen möglich. Somit wird ein THz-Sendestrahl 15 entlang einer optischen Achse A auf das Messobjekt 2 ausgesandt und an den Grenzflächen 2a, 2b teilweise reflektiert, zur Messung von Abständen, insbesondere einer Dicke d des Messobjektes 2 als Abstand der Grenzflächen 2a, 2b zueinander, wenn die optische Achse A senkrecht auf den Grenzflächen 2a, 2b positioniert ist.

Fig. 6 zeigt beispielhaft ein Signaldiagramm einer Messung, bei der eine Signalamplitude S in Abhängigkeit der Zeit t aufgetragen ist, wobei ein erster Messpeak P1 zum Zeitpunkt t1 beim Eintritt des THz-Sendestrahls 15 in die vordere Grenzfläche 2a ermittelt wird und zu einem späteren Zeitpunkt t4 ein Messpeak P4 beim Austritt der THz-Strahlung aus der hinteren Grenzfläche 2b ermittelt wird. Bei dieser Messung im Zeitraum kann somit eine Zeitdifferenz t4-t1 der Dicke d des Messobjektes 2 zugeordnet werden, wie es als solches bekannt ist. Entsprechend kann eine Messung und Auswertung bei Frequenzmodulation erfolgen.

Der THz-Transceiver 12 sendet den THz-Sendestrahl 15 innerhalb eines Abstrahl-Kegels 15a um die optische Achse A aus, sodass auch geneigt zur optischen Achse A verlaufende Strahlung ausgesandt wird, die entsprechend bei der orthogonalen Positionierung der optischen Achse A an den Grenzflächen 2a, 2b am THz-Transceiver 12 selbst nicht zu einem Messsignal führt. Der THz-Sendestrahl 15 wird jedoch insbesondere an unregelmäßigen Grenzflächen, wie zum Beispiel einer gekrümmten Oberfläche 3a des als Fehlstelle eingezeichneten Lunkers 3 in verschiedene Richtungen reflektiert, sodass zum einen der THz-Transceiver 12 selbst, und weiterhin auch zumindest einer oder einige der THz-Receiver 14 reflektierte THz-Strahlung 16 aufnehmen, die nicht von den Grenzflächen 2a, 2b reflektiert worden ist.

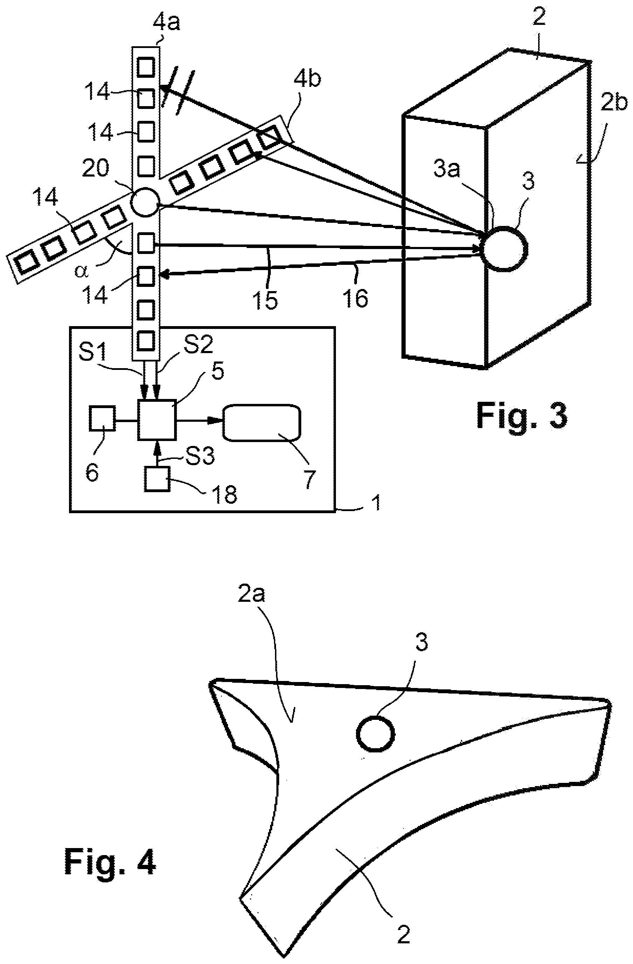

In Fig. 3 ist ein z.B. bei einem Gussvorgang auftretender Lunker als Fehlstelle 3 gezeigt; gemäß z.B. Fig. 5 kann eine Fehlstelle 3 auch als Haarriss bzw. Delaminierung im Kunststoffmaterial auftreten und als solche wiederum durch die zusätzlich gebildeten Grenzflächen, d.h. insbesondere als Lufteinschluss, erkannt werden.

In Fig. 6 sind beispielhaft Messpeaks P2 und P3 in den Zeitpunkten t2 und t3 eingezeichnet, die beim Eintritt in die und Austritt aus der Fehlstelle 3 erzeugt werden. Die Dicke der Fehlstelle 3, d.h. die Erstreckung in Richtung des THz-Sendestrahls, ergibt sich durch die Zeitdifferenz t3-t2; die Position der Fehlstelle 3 in dem Messobjekt 2 kann durch die Abstände zu den Grenzflächen 2a und 2b, d.h. durch die Zeitdifferenzen t4-t3 sowie entsprechend t2-t1 ermittelt werden. Weiterhin kann vorzugsweise auch die Höhe der Signalamplitude S ausgewertet werden, wobei die Höhe ΔS der Signalamplitude als Flächenerstreckung bzw. Größe der Fehlstelle senkrecht zum THz-Sendestrahl gewertet werden kann.

Aus dem Messsignal eines einzelnen Receivers 14 wird zunächst noch nicht die genaue Position der Fehlstelle 3, und weiterhin auch nicht ihre Größe und Formgebung bestimmt; zunächst wird eine Gesamt-Laufzeit der THz-Strahlung als Weg des THz-Sendestrahls 15 und der reflektierten THz-Strahlung 16 zurück zu dem Receiver 14 ermittelt, sodass für einen Reflexionspeak im Messsignal die Punkte, an denen die Reflektion erfolgt sein kann, im Allgemeinen auf einer Ellipse liegen, deren Brennpunkte durch den THz-Transceiver 12 und den THz-Receiver 14 bestimmt sind. Bereits durch ein lineares Antennen-Array 4 mit einem mittleren THz-Transceiver 12 und benachbarten THz-Receivern 14 können mehrere Messsignale aufgenommen werden, sodass grob die Richtung der Fehlstelle 3 abgeschätzt werden kann.

Das Antennen-Array 4 gemäß Fig. 1 weist vorteilhafterweise nicht nur einen aktiven THz-Transceiver 12 auf; vielmehr kann es mehrere THz-Transceiver 12 aufweisen, wobei vorteilhafterweise auch die THz-Receiver 14 zeitweise als Transceiver ausgebildet sein können. So kann zum Beispiel die aktive Funktion des THz-Transceivers 12 alternierend durchgeschaltet werden, sodass jeweils einer der Antennen-Dipole aktiv ist und den THz-Sendestrahl 15 ausgibt und die anderen Antennen-Dipole passiv reflektierte THz-Strahlung 16 aufnehmen. In Fig. 1 ist beispielhaft entsprechend ein zweiter THz-Transceiver 12 zum Aussenden eines THz-Sendestrahls 15 eingezeichnet.

Bereits durch eine derartige Ausbildung eines Antennen-Arrays 4 mit alternierender Funktion des aktiven THz-Transceivers 12 kann somit der THz-Sendestrahl 15 gegenüber dem Messobjekt 2 und der Fehlstelle 3 aus unterschiedlichen Richtungen bzw. Winkeln eingestrahlt werden, und aus entsprechend jeweils anders positionierten passiven Empfängern die reflektierte Strahlung 16 detektiert werden, sodass in der gezeigten Ebene der Fig. 1 eine bessere Vermessung der Grenzfläche 3a des Lunkers 3 möglich ist.

Hierbei gelangt der THz-Sendestrahl 15 zunächst von dem THz-Transceiver 12 ausgehend durch Luft bzw. die Umgebung zu der ersten Grenzfläche, das heißt der Vorderseite 2a, wobei hier ein kleiner Teil der Intensität von zum Beispiel 2-5 % reflektiert wird und der überwiegende Teil in das Messobjekt 2 eindringt. Entsprechend wird bei Ausbildung eines Lunkers als Fehlstelle 3 wiederum an dessen Grenzfläche 3a, die zum Beispiel ein inneres Gas oder Luft als Einschluss umgibt, ein Teil des THz-Sendestrahls 15 reflektiert, sodass THz-Strahlung 16 zurück reflektiert und ggf. von einem geeignet positionierten THz-Receiver 14 detektiert werden kann. Weiterhin dringt der THz-Sendestrahl 15 auch in den Lunker ein und wird auf der Rückseite des Lunkers, das heißt beim Wiedereintritt von dem Lunker 3 in das Material des Messobjektes 2 teilweise reflektiert, sodass auch hier THz-Strahlung 16 zurück reflektiert wird. Somit kann bei einer derartigen Messung nicht nur ein vorderer Bereich, sondern auch ein hinterer Bereich des Lunkers 3 erfasst werden, wobei Mehrfachreflektionen im Allgemeinen eher schwach sind, sodass direkt die Grenzflächen erfasst werden können.

Gemäß der Ausbildung der Fig. 2 ist das Antennen-Array 4 vorteilhafterweise nicht lediglich linear ausgebildet, sondern mit zweidimensionaler Erstreckung, das heißt als 2D-Antennenarray. Gemäß Fig.2 können hierzu zwei lineare Ausbildungen, das heißt zwei nicht-parallele Sensorleisten 4a, 4b vorgesehen sein, die vorzugsweise um einen Winkel α von 90° zueinander ausgerichtet sind und somit eine Ebene aufspannen, z.B. mit einem mittleren THz-Transceiver 12. Wenn somit lediglich der mittlere Antennen-Dipol als aktiver THz-Transceiver 12 ausgebildet ist, können die weiteren THz- Receiver 14 in zwei Dimensionen bzw. zwei Richtungen detektieren, sodass entsprechend bereits eine dreidimensionale Erfassung der Grenzfläche 3a der Fehlstelle 3 möglich ist. Hierdurch entsteht somit ein Tiefenbild der Fehlstelle 3. Das Antennen-Array 4 gemäß Fig. 2 weist somit.

Auch bei der Ausführungsform der Fig. 2 können vorteilhafterweise die Antennendipole jeder Senderleiste 4a, 4b jeweils aktiv sein und als THz-Transceiver 12 jeweils einen THz-Sendestrahl 15 ausgeben, und jeweils passiv als reiner THz-Receiver 14 reflektierte Strahlung 16 aufnehmen. Somit kann jeweils eine einziger Antennendipol als THz-Transceiver 12 aktiv senden und die weiteren Antennen-Dipole als passive Receiver 14 wirken.

Ein so gewonnenes THz-Messsignal S1 kann von der Steuereinrichtung 5 entsprechend ausgewertet werden zur Erstellung eines dreidimensionalen Bildes des Messobjektes 2 und der Position der Fehlstelle 3 im Messobjekt 2, das heißt die relative Lage der Fehlstelle 3, ihre Ausdehnung und Größe.

Weiterhin kann gemäß Fig. 2 ergänzend ein Beschleunigungssensor 18 vorgesehen sein, der vorzugsweise Beschleunigungen in drei Raumrichtungen zur Erfassung einer jeglichen Beschleunigungen aufweist. Wenn der Benutzer somit das THz-Messgerät 1 hantiert und bewegt, kann der Beschleunigungssensor 18 die Beschleunigung in den drei Raumrichtungen messen, so dass die Beschleunigungssignale S3 in der Steuereinrichtung 5 zeitlich integriert werden können. Der Beschleunigungssensor kann translatorische Beschleunigungen oder auch Drehbeschleunigungen messen. Somit kann eine translatorische Verstellung, weiterhin auch eine Drehbewegung bzw. Schwenkbewegung des THz-Messgerätes 1 erfasst werden.

Somit kann der Benutzer das THz-Messgerät 1 hantieren und bewegen und fortlaufend Messungen durchführen, sodass die Steuereinrichtung 5 die Messsignale S1 jeweils den aktuellen Positionen des THz-Messgeräts und somit des Antennen-Arrays 4 zuordnen kann. Bei Annahme eines stationären Messobjektes 2 kann somit durch Hantieren des THz-Messgerätes 1 die Genauigkeit der Messung erhöht werden, da von mehreren Messpositionen und mehreren Schwenkstellungen aus fortlaufenden Messungen erfolgen.

Somit wird eine genaue dreidimensionale Erfassung des Messobjektes 2 und seiner Fehlstellen 3 ermöglicht. Auf der Ausgabeeinrichtung 7 kann somit das gesamte Messobjekt 2 einschließlich seiner Fehlstellen 3 dargestellt werden, zum Beispiel als entsprechende grafische dreidimensionale Darstellung. Die Ausgabeeinrichtung 7 kann hierzu auch außerhalb des tragbaren THz-Messgerätes 1 vorgesehen sein. Wenn auf der Ausgabeeinrichtung 7 eine mögliche Fehlstelle 3 angezeigt wird, kann der Benutzer entsprechend das THz-Messgerät 1 nachführen bzw. weiter auf diese Position ausrichten und die Genauigkeit der Messdaten erhöhen, zum Beispiel durch Abfahren des entsprechenden Bereichs.

Gemäß der Ausführungsform der Fig. 3 kann das THz-Messgerät 1 weiterhin eine optische Kamera, z.B. RGB-Kamera 20 aufweisen, die entsprechend den Umgebungsbereich vor dem THz-Messgerät 1 um die optische Achse A herum erfasst und Bildsignale S2 liefert. Somit kann die Steuereinrichtung 5 die THz-Messsignale S1 und das Bildsignal S2 aufnehmen und zusammen mit den Beschleunigungssignalen S3 verarbeiten, und auf der Ausgabeeinrichtung 7 eine Darstellung des Messobjektes 2 anzeigen einschließlich Angaben wie z.B. der Dicke d, mit simulierter bzw. angezeigter Position, Dimension, Erstreckung, sowie ggf. Volumen der Fehlstelle 3.

Der Benutzer kann somit die Position der Fehlstelle 3 auf der Außenfläche 2a des Messobjektes 2 markieren.

Ein Benutzer kann insbesondere ein stationäres Messobjekt 2 von außen abfahren und erfassen. Auch gekrümmte Außenflächen des Messobjektes 2, zum Beispiel unregelmäßige Außenflächen, wie sie in Fig. 4 angedeutet sind und auch z.B. bei Rotorblättern vorliegen, können durch entsprechendes Hantieren und Abfahren mit dem THz-Messgerät 1 erfasst werden, woraufhin Fehlstellen 3 detektiert, nachfolgend genauer abgefahren, ausgewertet und angezeigt werden können.

Das THz-Messgerät 1 kann mit seinen Konturlinien 11 an der Außenfläche 2a positioniert werden. Weiterhin kann das THz- Messgerät 1 auch von dem Messobjekt 2 beanstandet gehalten, verfahren und geschwenkt werden, um die Fehlstellen 3 besser erfassen zu können.

Wie in Fig. 3 angedeutet können Lunker als Fehlstellen 3 ermittelt werden. Weiterhin können auch Porositäten und gemäß Fig. 5 durch Materialermüdung erzeugte Risse, insbesondere Haarrisse in den Grenzflächen bzw. Delaminierungen, als Fehlstellen ermittelt werden. Weiterhin können zum Beispiel auch aufgenommene Metallsplitter erfasst werden, die die THz-Strahlung 15 direkt reflektieren.

### Bezugszeichenliste

- 1: THz-Messgerät
- 2: Messobjekt
- 2a: Vorderseite des Messobjektes 2
- 2b: Rückseite des Messobjektes 2
- 3: Fehlstellen, Lunker
- 3a: gekrümmte Oberfläche, Grenzfläche des Lunkers 3
- 4: Antennen-Array
- 4a, 4b: Sensorleisten des Antennen-Arrays 4
- 5: Steuereinrichtung
- 6: interner Speicher
- 7: Ausgabeeinrichtung, zum Beispiel Anzeigeeinrichtung
- 8: Griffbereich
- 9: Betätigungseinrichtung
- 10: vorderer Endbereich
- 11: Anlagekontur, bzw. Konturlinien
- 12: THz- Transceiver
- 14: THz- Receiver
- 15: THz-Sendestrahl
- 15a: Abstrahl-Kegel
- 16: reflektierte THz-Strahlung
- 18: Beschleunigungssensor
- 20: optische Kamera (RGB-Kamera)
- A: optische Achse
- d: Dicke des Messobjektes 2
- S: Amplitude des THz-Messsignals S1
- S1: THz-Messsignal
- S2: Bildsignal der RGB-Kamera 20
- S3: Beschleunigungs-Messsignal des Beschleunigungssensors 18
- t1, t2 t3, t4: Zeitpunkte
- P1, P2, P3, P4: Messpeaks

## Patentansprüche

1. THz-Messgerät (1) zur Ermittlung von Fehlstellen (3) in einem Messobjekt (2), das aufweist:
ein Antennen-Array (4) mit mindestens einem aktiven THz-Sender (12), der einen THz-Sendestrahl (15) entlang einer optischen Achse (A) aussendet,
mehreren THz-Receivern (14), die unter einer festen räumlichen Anordnung zu dem THz- Sender (12) angeordnet und mit dem THz- Sender synchronisiert sind, reflektierte THz-Strahlung (16) detektieren und THz-Messsignale (S1) ausgeben, und
eine Steuereinrichtung (5), die die THz-Messsignale (S1) aufnimmt und Fehlstellen (3) als Reflektionen ermittelt, die außerhalb ordnungsgemäßer Grenzflächen (2a, 2b) des Messobjektes (2) erfolgt sind, **dadurch gekennzeichnet, dass**
es zumindest mit seinem Antennen-Array (4) tragbar ist, mit einem Griffbereich (8) zum Erfassen durch den Benutzer und zum Positionieren an verschiedenen Positionen vor oder an dem Messobjekt (2).

2. THz-Messgerät (1) nach Anspruch 1, **dadurch gekennzeichnet, dass** der THz-Sender ein THz-Transceiver (12) ist, der reflektierte THz-Strahlung (16) detektiert und ein THz-Messsignal (S1) ausgibt.

3. THz-Messgerät (1) nach Anspruch 2, **dadurch gekennzeichnet, dass** mindestens einer der THz-Receiver (14) zeitweise aktiv einen THz-Sendestrahl (15) aussendet,
wobei jeweils ein THz-Receiver (14) oder der THz- Transceiver (12) sendet und die anderen THz-Receiver (14) oder der THz- Transceiver (12) empfangen.

4. THz-Messgerät (1) nach Anspruch 3, **dadurch gekennzeichnet, dass** mehrere, vorzugsweise sämtliche THz-Receiver (14) zeitweise senden und der THz- Transceiver (12) zeitweise nur passiv reflektierte THz-Strahlung (16) empfängt, insbesondere mit alternierendem Wechsel der aktiven Sende-Funktion.

5. THz-Messgerät (1) nach einem der vorherigen Ansprüche, **dadurch gekennzeichnet, dass** das Antennen-Array (4) mindestens eine Sensorleiste (4a, 4b) als z.B. lineare Anordnung aus dem mindestens einen THz-Sender (12) und den mehreren THz-Receivern (14) aufweist, vorzugsweise mit mittlerer Anordnung des THz-Senders (12).

6. THz-Messgerät (1) nach einem der vorherigen Ansprüche, **dadurch gekennzeichnet, dass** es zwei nicht-parallele, z.B. lineare Anordnungen von THz- Receivern (14) aufweist, insbesondere als zwei sich kreuzende Sensorleisten (4a, 4b) oder zweidimensionale Matrixanordnung von THz-Receivern (14).

7. THz-Messgerät (1) nach einem der vorherigen Ansprüche, **dadurch gekennzeichnet, dass** es weiterhin eine Beschleunigungssensor-Einrichtung (18) zur Messung von Beschleunigungen des THz-Messgeräts (1) und Ausgabe eines Beschleunigungs-Messsignals (S3) aufweist, vorzugsweise zur Messung von Beschleunigungen in den drei Raumrichtungen und/oder in ein oder mehreren Drehrichtungen,
wobei die Steuereinrichtung (5) das Beschleunigungs-Messsignal (S3) aufnimmt und durch zweimalige zeitliche Integration die räumliche Position des THz-Messgeräts (1) beim Senden und Empfangen der THz-Strahlung (15, 16) ermittelt.

8. THz-Messgerät (1) nach Anspruch 7, **dadurch gekennzeichnet, dass** die Steuereinrichtung (5) aus den THz-Messsignalen (S1) weiterhin Grenzflächen (2a, 2b) des Messobjektes (2) und eine relative Position der Fehlstelle (3) in dem Messobjekt (2) sowie die dreidimensionale Anordnung von Grenzflächen (3a) der Fehlstelle (3) ermittelt, vorzugsweise einschließlich des Volumens der Fehlstelle (3).

9. THz-Messgerät (1) nach einem der vorherigen Ansprüche, **dadurch gekennzeichnet, dass** die Steuereinrichtung (5) eine Höhe (ΔS) der Amplitude (S) des THz-Messsignals (S1) auswertet und aus der Höhe (ΔS) der Amplitude (S), insbesondere bei Messungen in mehreren Schwenkstellungen und/oder Positionen des THz-Messgeräts (1), eine Größe oder erfasste Fläche (A) der Fehlstelle (3) ermittelt.

10. THz-Messgerät (1) nach einem der vorherigen Ansprüche, **dadurch gekennzeichnet, dass** es eine Anlagekontur (11) zur Anlage und definierten Positionierung an dem Messobjekt (2) aufweist.

11. THz-Messgerät (1) nach einem der vorherigen Ansprüche, **dadurch gekennzeichnet, dass** es weiterhin eine optische Ausgabeeinrichtung (7) aufweist zur Ausgabe eines dreidimensionalen Bildes des Messobjektes (2) und der ermittelten Fehlstellen (3),
wobei die optische Ausgabeeinrichtung (7) in einem tragbaren oder stationären Teil vorgesehen ist.

12. THz-Messgerät (1) nach einem der vorherigen Ansprüche, dadurch ge-
kennzeichnet, dass es weiterhin eine optische Kamera, vorzugsweise RGB-Kamera (20), aufweist zum Erfassen des Messobjekts (2) und Ausgeben von Bildsignalen (S2) an die Steuereinrichtung (5),
wobei die Steuereinrichtung (5) aus den Bildsignalen (S2) und den THz-Messsignalen (S1) eine dreidimensionale Darstellung des Messobjektes (2) mit angezeigter Position, Ausdehnung und/oder Form der Fehlstelle (3) in dem Messobjekt (2) erstellt.

13. THz-Messverfahren zum Ermitteln einer Fehlstelle (3) in einem Messobjekt (2), bei dem
von einem THz-Messgerät (1), das ein Antennen-Array (4) mit mindestens einem THz-Sender (12) und mehreren THz-Receivern (14) aufweist, ein THz-Sendestrahl (15) auf das Messobjekt (2) ausgesandt und von dem Messobjekt (2) reflektierte THz-Strahlung (16) von den mehreren THz-Receivern (14) aufgenommen wird, wodurch THz-Messsignale (S1) gebildet werden,
aus den THz-Messsignalen (S1) ermittelt wird, ob zumindest ein Teil der aufgenommenen reflektierten THz-Strahlung (16) außerhalb ordnungsgemäßer Grenzflächen (2a, 2b) des Messobjektes (2) reflektiert wurde, wobei zusätzlich ermittelte Grenzflächen (3a) in dem Messobjekt (2) einer Fehlstelle (3) zugeordnet werden,
wobei
- zumindest ein tragbarer Teil des THz-Messgerätes (1) mit dem Antennen-Array (4) von dem Benutzer gegenüber einem stationären Messobjekt (2) verstellt wird,
- wobei die Verstellbewegungen durch Messung von Beschleunigungen, in drei Raumrichtungen, ermittelt werden,
- eine relative Position des THz-Messgerätes (1) zu dem stationären Messobjekt (2) durch zweifache zeitliche Integration ermittelt wird, und
- eine Position und Erstreckung der detektierten Fehlstellen (3) in dem Messobjekt (2) ermittelt wird.

14. Verfahren nach Anspruch 13, **dadurch gekennzeichnet, dass** THz-Strahlung (16) detektiert wird, die in mehrere Richtungen reflektiert worden ist, vorzugsweise durch sich kreuzende Sensorleisten (4a, 4b) eines Antennen-Arrays (4).

15. Verfahren nach Anspruch 13 oder 14, **dadurch gekennzeichnet, dass** zeitweise die THz-Receiver (14) aktiv den THz-Sendestrahl (15) aussenden und der THz-Sender (12) als Transceiver (12) dann lediglich passiv THz-Strahlung detektiert,
vorzugsweise mit alternierendem Wechsel des Aussendens des THz-Sendestrahls (15), wobei die nicht aktiven THz-Receiver (14) oder der nicht aktive THz-Transceiver (12) jeweils passiv die THz-Strahlung (15) detektieren.

16. Verfahren nach einem der Ansprüche 13 bis 15, **dadurch gekennzeichnet, dass** eine Höhe (ΔS) der Signalamplitude (S) des THz-Messsignals (S1) ausgewertet wird und aus der Höhe (ΔS) der Signalamplitude (S), insbesondere bei Messungen in mehreren Schwenkstellungen und/oder Positionen des THz-Messgeräts (1), eine Größe oder erfasste Fläche (A) der Fehlstelle (3) ermittelt wird.

17. Verfahren nach einem der Ansprüche 13 bis 16, **dadurch gekennzeichnet, dass**
weiterhin von dem THz-Messgerät (1) ein optisches Bild des Messobjektes (2) erfasst und ein Bildsignal (S2) erzeugt wird, und
durch Auswertung des Bildsignals (S2), des THz-Messsignals (S1) und vorzugsweise des THz-Beschleunigungssignals (S3) eine dreidimensionale Zuordnung der THz-Messsignale (S1) und der Bildsignale (S2) erfolgt, und
eine dreidimensionale Darstellung des Messobjektes (2) mit dreidimensionaler Darstellung der Positionen, Größe und Ausdehnung der ermittelten Fehlstellen (3) ausgegeben wird.

## Claims

1. THz measuring apparatus (1) for determining impurities (3) in a measured object (2), comprising:
an antenna array (4) with at least one active THz transmitter (12) emitting a THz transmission beam (15) along an optical axis (A),
a plurality of THz receivers (14) arranged under a fixed spatial arrangement in relation to said THz transmitter (12) and synchronised with said THz transmitter, detecting reflected THz radiation (16) and putting out THz measuring signals (S1), and
a control device (5), receiving said THz measuring signals (S1) and determining impurities (3) as reflections that have occurred outside proper boundary surfaces (2a, 2b) of the measured object (2),
**characterised in that**
it is portable, at least with its antenna array (4), by a handle region (8) for grabbing by the user and for positioning on various positions in front of or on said measured object (2).

2. THz measuring apparatus (1) according to claim 1, **characterised in that** said THz transmitter is a THz transceiver (12) detecting reflected THz radiation (16) and putting out a THz measuring signal (S1).

3. THz measuring apparatus (1) according to claim 2, **characterised in that** at least one of said THz receivers (14) temporarily actively sends out a THz transmission beam (15),
where always one THz receiver (14) or said THz transceiver (12) transmits and the other THz receivers (14) or said THz transceiver (12) receives.

4. THz measuring apparatus (1) according to claim 3, **characterised in that** a plurality, preferably all, of said THz receivers (14) temporarily transmit and said THz transceiver (12) temporarily only passively receives reflected THz radiation (16), in particular, with alternating switching of the active transmission function.

5. THz measuring apparatus (1) according to one of the preceding claims, **characterised in that** said antenna array (4) comprises at least one sensor strip (4a, 4b) as e.g. linear arrangement made of said at least one THz transmitter (12) and said plurality of THz receivers (14), preferably with a middle arrangement of said THz transmitter (12).

6. THz measuring apparatus (1) according to one of the preceding claims, **characterised in that** it comprises two non-parallel, e.g. linear, arrangements of THz receivers (14), in particular, as two inter-crossed sensor strips (4a, 4b) or two-dimensional matrix arrangement of THz receivers (14).

7. THz measuring apparatus (1) according to one of the preceding claims, **characterised in that** it further comprises an acceleration sensor means (18) for measuring accelerations of said THz measuring apparatus (1) and putting out an acceleration measuring signal (S3), preferably for measuring acceleration in the three spatial directions and/or in one or more rotational directions,
said control device (5) receiving said acceleration measuring signal (S3) and determining the spatial position of said THz measuring apparatus (1), by double temporal integration, upon transmitting and receiving said THz radiation (15, 16).

8. THz measuring apparatus (1) according to claim 7, **characterised in that** said control device (5) further determining, from said THz measuring signals (S1), boundary surfaces (2a, 2b) of said measured object (2) and a relative position of the impurity (3) in said measured object (2) as well as the three-dimensional arrangement of boundary surfaces (3a) of the impurity (3), preferably including the volume of the impurity (3).

9. THz measuring apparatus (1) according to one of the preceding claims, **characterised in that** said control device (5) evaluates a height (ΔS) of the amplitude (S) of said THz measuring signal (S1) and determines, from the height (ΔS) of the amplitude (S), in particular in case of measurements in a plurality of pivoting positions and/or positions of said THz measuring apparatus (1), a size or captured surface (A) of the impurity (3).

10. THz measuring apparatus (1) according to claim 10, **characterised in that** it comprises a contact contour (11) for contacting and defined positioning on said measured object (2).

11. THz measuring apparatus (1) according to one of the preceding claims,
**characterised in that** it further comprises an optical output means (7) for putting out a three-dimensional image of said measured object (2) and the determined impurities (3),
said optical output means (7) being provided in a portable or stationary part.

12. THz measuring apparatus (1) according to one of the preceding claims,
**characterised in that** it further comprises an optical camera, preferably RGB camera (20), for capturing the measured object (2) and putting out image signals (S2) to said control device (5),
said control device (5) generating, from said image signals (S2) and said THz measuring signals (S1), a three-dimensional representation of said measured object (2) with indicated position, extension and/or shape of the impurity (3) in said measured object (2).

13. THz measuring method for determining an impurity (3) in a measured object (2), where
a THz measuring apparatus (1), comprising an antenna array (4) including at least one THz transmitter (12) and a plurality of THz receivers (14), emits a THz transmission beam (15) towards said measured object (2), and said plurality of THz receivers (14) receive THz radiation (16) reflected from said measured object (2), whereby THz measuring signals (S1) are created,
a determination is made from said THz measuring signals (S1) as to whether at least part of the received reflected THz radiation (16) was reflected outside ordinary boundary surfaces (2a, 2b) of said measured object (2),
where, additionally determined boundary surfaces (3a) in said measured object (2) are associated with an impurity (3),
wherein
- at least a portable part of said THz measuring apparatus (1) with the antenna array (4) is adjusted by the user in relation to a stationary measured object (2),
- wherein the adjustment movements are determined by measuring the acceleration, preferably in three spatial directions,
- a relative position of said THz measuring apparatus (1) in relation to said stationary measured object (2) is determined by double temporal integration, and
- a position and extension of the detected impurities (3) in said measured object (2) is determined.

14. Method according to claim 13, **characterised in that** THz radiation (16) is detected which has been reflected in several directions, preferably by means of inter-crossed sensor strips (4a, 4b) of an antenna array (4).

15. Method according to claim 13 or 14, **characterised in that**
said THz-Receivers (14) temporarily actively emit said THz transmission beam (15) and then said THz transmitter (12) as transceiver (12) detects THz radiation merely passively,
preferably with alternating switching of transmitting said THz transmission beams (15), wherein the non-active THz receivers (14) or the non-active THz transceiver (12) each detect said THz radiation (15) passively.

16. Method according to one of the claims 13 through 15, **characterised in that** a height (ΔS) of the signal amplitude (S) of the THz measuring signal (S1) is evaluated and, from the height (ΔS) of the signal amplitude (S), in particular in case of measurement in a plurality of pivoting positions and/or positions of the THz measuring apparatus (1), a size or detected surface (A) of the impurity (3) is determined.

17. Method according to one of the claims 13 through 16, **characterised in that**
further, said THz measuring apparatus (1) captures an optical image of said measured object (2) and generates an image signal (S2), and a three-dimensional association of the THz measuring signals (S1) and the image signals (S2) is carried out by evaluating the image signal (S2), the THz measuring signal (S1) and preferably of the THz acceleration signal (S3), and
a three-dimensional representation of the measured object (2) with three-dimensional representation of the positions, size and extensions of the determined impurities (3) is put out.

## Revendications

1. Appareil (1) de mesure THz destiné à déterminer des défauts (3) dans un objet de mesure (2), comprenant :
un réseau d'antennes (4) comprenant au moins un émetteur THz (12) actif qui émet un faisceau (15) d'émission THz le long d'un axe optique (A),
plusieurs récepteurs THz (14) qui sont disposés selon un agencement spatial fixe par rapport à l'émetteur THz (12) et synchronisés avec l'émetteur THz, détectent le rayonnement THz (16) réfléchi et délivrent des signaux (S1) de mesure THz, et
un dispositif de commande (5) qui reçoit les signaux (S1) de mesure THz et détermine les défauts (3) sous forme de réflexions qui se produisent en dehors des interfaces (2a, 2b) normales de l'objet de mesure (2), **caractérisé en ce que**
il est portable au moins avec son réseau d'antennes (4), avec une zone de préhension (8) permettant à l'utilisateur de le saisir et de le positionner à différentes positions devant ou sur l'objet de mesure (2).

2. Appareil (1) de mesure THz selon la revendication 1, **caractérisé en ce que** l'émetteur THz est un émetteur-récepteur THz (12) qui détecte le rayonnement THz (16) réfléchi et délivre un signal (S1) de mesure THz.

3. Appareil (1) de mesure THz selon la revendication 2, **caractérisé en ce qu'**au moins l'un des récepteurs THz (14) émet de manière intermittente un faisceau (15) d'émission THz,
dans lequel respectivement un récepteur THz (14) ou l'émetteur-récepteur THz (12) émet et les autres récepteurs THz (14) ou l'émetteur-récepteur THz (12) reçoit.

4. Appareil (1) de mesure THz selon la revendication 3, **caractérisé en ce que** plusieurs, de préférence tous les récepteurs THz (14) émettent de manière intermittente et l'émetteur-récepteur THz (12) ne reçoit de manière intermittente que le rayonnement THz (16) réfléchi passivement, en particulier avec un changement alterné de la fonction d'émission active.

5. Appareil (1) de mesure THz selon l'une des revendications précédentes, **caractérisé en ce que** le réseau d'antennes (4) comprend au moins une barre de détection (4a, 4b) sous la forme, par exemple, d'un agencement linéaire composé de l'au moins un émetteur THz (12) et des plusieurs récepteurs THz (14), de préférence avec un agencement central de l'émetteur THz (12).

6. Appareil (1) de mesure THz selon l'une des revendications précédentes, **caractérisé en ce qu'**il comprend deux agencements non parallèles, par exemple linéaires, de récepteurs THz (14), en particulier sous la forme de deux barres de détection (4a, 4b) qui se croisent ou d'un agencement matriciel bidimensionnel de récepteurs THz (14).

7. Appareil (1) de mesure THz selon l'une des revendications précédentes, **caractérisé en ce qu'**il comprend en outre un dispositif (18) capteur d'accélération pour mesurer les accélérations de l'appareil (1) de mesure THz et délivrer un signal (S3) de mesure d'accélération, de préférence pour mesurer les accélérations dans les trois directions spatiales et/ou dans une ou plusieurs directions de rotation,
dans lequel le dispositif de commande (5) reçoit le signal (S3) de mesure d'accélération et détermine, par une double intégration temporelle, la position spatiale de l'appareil (1) de mesure THz lors de l'émission et de la réception du rayonnement THz (15, 16).

8. Appareil (1) de mesure THz selon la revendication 7, **caractérisé en ce que** le dispositif de commande (5) détermine en outre, à partir des signaux (S1) de mesure THz, les interfaces (2a, 2b) de l'objet de mesure (2) et une position relative du défaut (3) dans l'objet de mesure (2) ainsi que l'agencement tridimensionnel des interfaces (3a) du défaut (3), incluant de préférence le volume du défaut (3).

9. Appareil (1) de mesure THz selon l'une des revendications précédentes, **caractérisé en ce que** le dispositif de commande (5) évalue une hauteur (ΔS) de l'amplitude (S) du signal (S1) de mesure THz et détermine, à partir de la hauteur (ΔS) de l'amplitude (S), en particulier lors de mesures dans plusieurs positions de pivotement et/ou positions de l'appareil (1) de mesure THz, une grandeur ou une surface détectée (A) du défaut (3).

10. Appareil (1) de mesure THz selon l'une des revendications précédentes, **caractérisé en ce qu'**il comprend un contour d'appui (11) pour l'appui et le positionnement défini sur l'objet de mesure (2).

11. Appareil (1) de mesure THz selon l'une des revendications précédentes, **caractérisé en ce qu'**il comprend en outre un dispositif (7) de sortie optique pour délivrer une image tridimensionnelle de l'objet de mesure (2) et des défauts (3) détectés,
dans lequel le dispositif (7) de sortie optique est prévu dans une partie portable ou stationnaire.

12. Appareil (1) de mesure THz selon l'une des revendications précédentes, **caractérisé en ce qu'**il comprend en outre une caméra optique, de préférence une caméra RVB (20), pour détecter l'objet de mesure (2) et délivrer des signaux (S2) d'image vers le dispositif de commande (5),
dans lequel le dispositif de commande (5) crée à partir des signaux (S2) d'image et des signaux (S1) de mesure THz une représentation tridimensionnelle de l'objet de mesure (2) avec indication de la position, de l'étendue et/ou de la forme du défaut (3) dans l'objet de mesure (2).

13. Procédé de mesure THz destiné à déterminer des défauts (3) dans un objet de mesure (2), dans lequel
à partir d'un appareil (1) de mesure THz qui comprend un réseau d'antennes (4) avec au moins un émetteur THz (12) et plusieurs récepteurs THz (14), un faisceau (15) d'émission THz est émis vers l'objet de mesure (2) et le rayonnement THz (16) réfléchi par l'objet de mesure (2) est reçu par les plusieurs récepteurs THz (14), formant ainsi des signaux (S1) de mesure THz,
à partir des signaux (S1) de mesure THz, il est déterminé si au moins une partie du rayonnement THz (16) réfléchi reçu a été réfléchie en dehors des interfaces (2a, 2b) normales de l'objet de mesure (2), des interfaces (3a) supplémentaires déterminées dans l'objet de mesure (2) étant attribuées à un défaut (3),
dans lequel
- au moins une partie portable de l'appareil (1) de mesure THz avec le réseau d'antennes (4) est déplacée par l'utilisateur par rapport à un objet de mesure (2) stationnaire,
- les mouvements de déplacement étant déterminés par la mesure des accélérations dans trois directions spatiales,
- une position relative de l'appareil (1) de mesure THz par rapport à l'objet de mesure (2) stationnaire est déterminée par double intégration temporelle, et
- une position et une étendue des défauts (3) détectés dans l'objet de mesure (2) sont déterminées.

14. Procédé selon la revendication 13, **caractérisé en ce que** le rayonnement THz (16) qui a été réfléchi dans plusieurs directions est détecté, de préférence par des barres de détection (4a, 4b) qui se croisent d'un réseau d'antennes (4).

15. Procédé selon la revendication 13 ou 14, **caractérisé en ce que**, de manière intermittente, les récepteurs THz (14) émettent de manière active le faisceau (15) d'émission THz et l'émetteur THz (12) en tant qu'émetteur-récepteur (12) détecte alors le rayonnement Thz uniquement de manière passive,
de préférence avec un changement alterné de l'émission du faisceau (15) d'émission THz, les récepteurs THz (14) non actifs ou l'émetteur-récepteur THz (12) non actif détectant respectivement le rayonnement THz (15) de manière passive.

16. Procédé selon l'une des revendications 13 à 15, **caractérisé en ce qu'**une hauteur (ΔS) de l'amplitude (S) de signal du signal (S1) de mesure THz est évaluée et, à partir de la hauteur (ΔS) de l'amplitude (S) de signal, en particulier lors de mesures dans plusieurs positions de pivotement et/ou positions de l'appareil (1) de mesure THz, une grandeur ou une surface détectée (A) du défaut (3) est déterminée.

17. Procédé selon l'une des revendications 13 à 16, **caractérisé en ce que**
l'appareil (1) de mesure THz détecte en outre une image optique de l'objet de mesure (2) et génère un signal (S2) d'image, et
par évaluation du signal (S2) d'image, du signal (S1) de mesure THz et, de préférence, du signal (S3) d'accélération THz, une répartition tridimensionnelle des signaux (S1) de mesure THz et des signaux (S2) d'image est effectuée, et
une représentation tridimensionnelle de l'objet de mesure (2) avec une représentation tridimensionnelle des positions, de la grandeur et de l'étendue des défauts (3) déterminés est délivrée.
